# EUROPEAN PATENT APPLICATION

(11) **EP 1 591 964 A1**
(43) Date of publication of application: **02.11.2005**
(21) Application number: 03815741.8
(22) Date of filing: 30.09.2003
(51) Int. Cl.: G06T 15/00

(54) **IMAGE GENERATION DEVICE, IMAGE GENERATION METHOD, AND PROGRAM**

(30) Priority: 05.02.2003 JP 2003028178
(71) Applicant: Konami Corporation, Chiyoda-ku, Tokyo 100-6330 (JP)
(72) Inventor: HATAKEDA, Norihito, Konami Corporation, Chiyoda-ku, Tokyo 100-6330 (JP)
(74) Representative: Winter, Konrad Theodor
(86) International application number: PCT/JP2003/012526
(87) International publication number: WO 2004/070662

(57) **Abstract**

An image generating apparatus includes a control portion (11) for generating display image data to be displayed on a screen based on information on at least one three-dimensional object disposed in a three-dimensional space and information on a viewpoint position. Of the display image data, image area identification data identifying an image area corresponding to the three-dimensional object is stored in memory. Image defocusing processing is applied at least locally to the display image based on the image area identification data.

## Description

### TECHNICAL FIELD

The present invention relates to an image generating apparatus, an image generating method, and a program used in a game machine etc. using three-dimensional image data.

### BACKGROUND ART

There has been in recent years an increasing number of computer games, in which a hero or heroine character moving within a three-dimensional space fights against an enemy character or a player enjoys and experiences a virtual adventure game. Against this background, remarkable progress has recently been made in image generating capabilities of hardware provided for gaming applications (including game machines for home use, personal computers, and the like), and it is now possible with these capabilities to represent various types of images.

In a conventional image generating apparatus, however, to accurately represent irregularities on polygonal surfaces making up a three-dimensional object, it is necessary to dispose the polygons along the irregularities. This involves an increased number of polygons, presenting a problem of requiring considerable computing operation time.

A method (bump mapping) is available, in which information on a normal direction at each of different positions on the polygon forming surface is adjusted so as to vary the direction in which light is reflected, thereby making the polygon forming surface look as if there are irregularities formed thereon. If the bump mapping method is adopted, the actual shape of the polygon is not altered though the polygon forming surface looks as if there are irregularities formed thereon. As such, no shapes of irregularities occur on edges of the polygon.

For this reason, the following examples of representation have always involved an increased number of polygons: specifically, a window frame looking distorted, a window frame softly swinging, a skin of a polygon-formed character moving as if the character were breathing, and the like.

It is therefore an object of the present invention to provide an image generating apparatus, an image generating method, and a program capable of producing an image representing an unsteady object without involving an increased load of computing operations, such as an increased number of polygons.

### DISCLOSURE OF THE INVENTION

To achieve the foregoing object, there is provided in accordance with the present invention an image generating apparatus that includes the following components: specifically, display image generating means for generating display image data to be displayed on a screen based on information on at least one three-dimensional object disposed in a three-dimensional space and information on a viewpoint position; image area identification data storage means for storing image area identification data that, of the display image data, specifically identifies an image area corresponding to the three-dimensional object; and image processing means for applying image defocusing processing at least locally to the display image data based on the image area identification data.

By using the image defocusing processing as described in the foregoing, it is possible to produce an image representing an unsteady object without increasing computing operation load, such as with an increased number of polygons.

In accordance with the present invention, there is provided an image generating apparatus that includes the following components: specifically, display image generating means for generating display image data to be displayed on a screen based on information on at least one three-dimensional object disposed in a three-dimensional space and information on a viewpoint position; elemental image generating means for generating elemental image data that is applied to a surface forming the three-dimensional object and that draws at least one elemental image in an image area corresponding to the surface forming the three-dimensional object; synthesizing means for generating synthesized display image data to be displayed on the screen by synthesizing the generated elemental image data with the display image data generated based on the information on the three-dimensional object; and image processing means for applying image defocusing processing at least locally to the synthesized display image data.

By using the image defocusing processing for the synthesized display image data obtained through synthesizing the elemental image data as described in the foregoing, it is possible to produce an image representing an unsteady object without involving the increased load of computing operations, such as an increased number of polygons.

Preferably the image generating apparatus in accordance with the present invention may even further include storage means for storing original texture map image data to be applied to the surface forming the three-dimensional object. The display image generating means may, when generating the display image data, apply the original texture map image data stored in the storage means to the surface forming the three-dimensional object, thereby generating the display image data.

In addition, the original texture map image data may preferably include synthesizing area identification information that identifies an area, on which image data different from the original texture image can be synthesized. The elemental image generating means may determine a drawing position of the elemental image based on the synthesizing area identification information of the original texture map image data.

Moreover, the elemental image data may include synthesizing area identification information that identifies an area in which image data different from the elemental image can be synthesized. The image processing means then determines at least one portion to which the image defocusing processing is applied, based on the synthesizing area identification information included in each of the elemental image data and the original texture map image data. The image processing means thereby applies the image defocusing processing to the portion determined in this manner.

Further, the elemental image data or the portion, to which the image defocusing processing is to be applied, may be changed with time.

An image generating method in accordance with an aspect of the present invention uses a computer for performing the following steps: specifically, a display image generating step for generating a display image to be displayed on a screen based on information on at least one three-dimensional object disposed in a three-dimensional space and information on a viewpoint position; an image area identification data storage step for storing image area identification data that, of the display image, specifically identifies an image area corresponding to the three-dimensional object; and an image processing step for applying image defocusing processing at least locally to the display image based on the image area identification data.

A computer-readable storage medium in accordance with another aspect of the present invention stores a program for allowing a computer to function following procedures: specifically, a display image generating procedure for generating a display image to be displayed on a screen based on information on at least one three-dimensional object disposed in a three-dimensional space and information on a viewpoint position; an image area identification data storage procedure for storing image area identification data that specifically identifies an image area in the display image corresponding to the three-dimensional object; and an image processing procedure for applying image defocusing processing at least locally to the display image based on the image area identification data.

A computer-readable storage medium in accordance with still another aspect of the present invention stores display image data generated according to the aforementioned image generating method.

### BRIEF DESCRIPTION OF THE DRAWINGS

Preferred embodiments of the present invention will now be described, by way of example only, and with reference to the accompanying drawings in which:
FIG. 1 is a block diagram showing a typical image generating apparatus according to a preferred embodiment of the present invention;
FIG. 2 is a functional block diagram showing typical processes performed by an image generating apparatus according to a preferred embodiment of the present invention;
FIG. 3 is an explanatory diagram showing a typical process for generating display image data performed by an image generating apparatus according to a preferred embodiment of the present invention; and
FIG. 4 is a view showing explanatory diagrams illustrating processes for image generation according to a preferred embodiment of the present invention.

### DESCRIPTION OF PREFERRED EMBODIMENTS

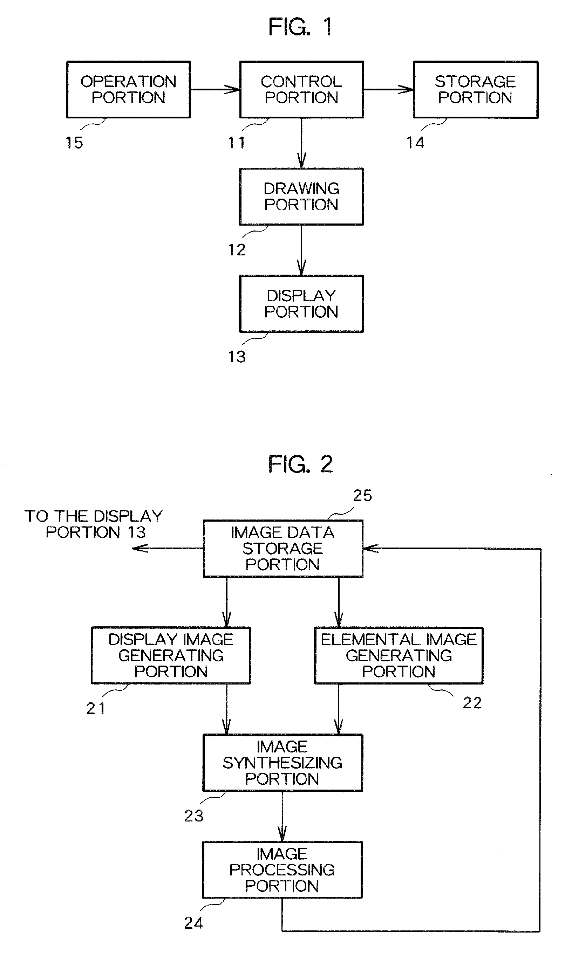

Preferred embodiments of the present invention will be described with reference to the accompanying drawings. An image generating apparatus in accordance with a preferred embodiment of the present invention may be realized, for example, by using a game machine for home use. The image generating apparatus in accordance with the preferred embodiment of the present invention includes, as shown in FIG. 1, a control portion 11, a drawing portion 12, a display portion 13, a storage portion 14, and an operation portion 15. The description given hereunder uses as an example a game machine for home use. The image generating apparatus in accordance with the preferred embodiment of the present invention can nonetheless be realized through a game machine for business use, a personal computer, a workstation for computer graphics used for making of films etc., and other computer systems.

The control portion 11 reads a program from the storage portion 14 and executes the program. Specifically, the control portion 11 executes processing operations of the game according to the program read from the storage portion 14. More precisely, the control portion 11 produces an output to the drawing portion 12, instructing the drawing portion 12 to generate image data that form the game screen. The control portion 11 performs gaming operations in accordance with commands and instructions given by a player as he or she performs operations from the operation portion 15.

In accordance with the preferred embodiment of the present invention, the control portion 11 allows the player to play a game as detailed in the following. Specifically, the game is played as the game screen displays image data generated based on information on a three-dimensional object disposed in a three-dimensional space [for example, information on polygons (information on the position and color of the polygon and the like) and information on one or more light sources (information on the position of the light sources, intensity and color of the lights, and the like)]. The game may, for example, be a hero or heroine character moving within the three-dimensional space and fighting against an enemy character or a player enjoying and experiencing a virtual adventure game.

In accordance with the instructions given through the input from the control portion 11, the drawing portion 12 generates image data to be displayed on the screen based on the information on the three-dimensional object disposed in the three-dimensional space. The drawing portion 12 then produces an output of the generated image data to the display portion 13. Specifically, the drawing portion 12 uses information on a viewpoint given separately from the control portion 11 to generate image data that represent a condition of the three-dimensional space as viewed from the viewpoint. In accordance with the preferred embodiment of the present invention, the image data are a bit map formed by including groups of pixels arranged two-dimensionally.

One characteristic aspect according to the preferred embodiment of the present invention is that the drawing portion 12 performs edge processing, in which shapes of irregularities are assigned to edge portions of the three-dimensional object specified by the control portion 11. Specific details of the processing operations performed by the control portion 11 and the drawing portion 12 will be described later.

The display portion 13 stores the image data input from the drawing portion 12 and produces an output of a signal for displaying the image data on an external display device. For example, the display portion 13 produces outputs of an RF signal, an NTSC signal, and the like for allowing the image data to be displayed on a TV set for home use. The signal for allowing the image data to be displayed may be an RGB signal or the like for displaying the data on a display.

The storage portion 14 stores the program to be executed by the control portion 11. The storage portion 14 may include an external storage device for reading data or programs stored in a computer-readable storage medium, such as CD-ROM or DVD-ROM, in addition to a semiconductor storage device such as RAM (Random Access Memory). In addition, if a program is stored in a database provided for a server and the server delivers the program, the database provided for the server is also included in such an information storage medium as enumerated above. The storage portion 14 also stores therein information of three-dimensional objects to be drawn and texture map image data (original texture map image data) to be applied to the corresponding three-dimensional objects. The operation portion 15 receives an operating command issued by the player and produces an output of the operating command to the control portion 11. The operation portion 15 may be a game controller or the like.

Specific processing operations performed by the control portion 11 and the drawing portion 12 will be described with reference to FIG. 2. For the purpose of this specification, a three-dimensional object that is to be processed for unsteadiness representation is called the object for unsteadiness processing. FIG. 2 is a functional block diagram showing processes performed by the control portion 11 and the drawing portion 12 of the image generating apparatus according to the preferred embodiment of the present invention. Referring to FIG. 2, the processing program executed by the control portion 11 and the drawing portion 12 of the image generating apparatus according to the preferred embodiment of the present invention is organized by including a display image generating portion 21, an elemental image generating portion 22, an image synthesizing portion 23, an image processing portion 24, and an image data storage portion 25.

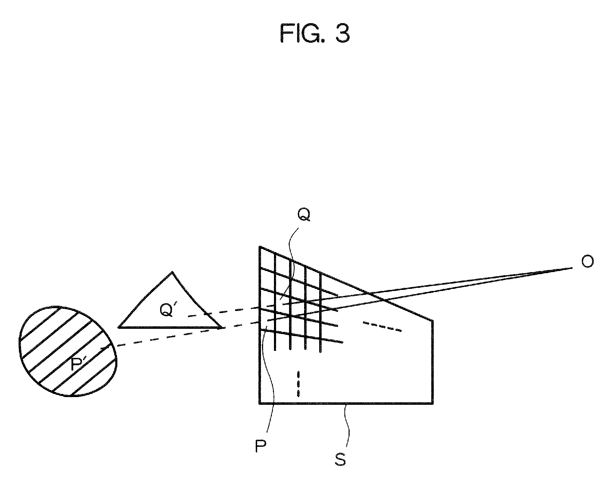

The display image generating portion 21 reads the information on the three-dimensional object disposed in the three-dimensional space from the storage portion 14 and generates display image data to be displayed on the screen based on the information on the three-dimensional object and information on a given viewpoint position. The display image generating portion 21 then stores the display image data in the image data storage portion 25. Specifically, the display image data is a two-dimensional array of pixels. The display image generating portion 21 selects each of these pixels in a predetermined sequence and determines the color for that particular pixel selected in the correct sequence based on the information on the three-dimensional object and the information on the given viewpoint position. If there are a plurality of three-dimensional objects involved, the display image generating portion 21 forms the display image data on a virtual screen S as shown in FIG. 3. While selecting each pixel on the display image data, the display image generating portion 21 then determines the color for that particular pixel selected. Specifically, a three-dimensional object that is the nearest to a viewpoint position O is first selected from among those seen in perspective from the viewpoint position O through the pixel selected. The display image generating portion 21 then uses the color applied to a surface on the side of the viewpoint position O (hereinafter referred to as a surface) of all forming surfaces of the three-dimensional object nearest the viewpoint position O. For example, FIG. 3 depicts a triangular plate-like three-dimensional object disposed between a disk-shaped three-dimensional object and a screen S. Of all points on the surface of the three-dimensional object seen in perspective through a pixel P of the display image data formed on the screen S, a point P' on the disk is the closest to the viewpoint position. Of all points on the surface of the three-dimensional object seen in perspective through a pixel Q of the display image data formed on the screen S, on the other hand, a point Q' on the triangular plate is the closest to the viewpoint position. The color for the pixel P is determined using the color of the portion P' and the color for the pixel Q is determined using the color of the portion Q'. The information on each pixel of the display image data includes information on the distance (Z value) between the position on the three-dimensional object, with which the color of the pixel in question is determined, and the viewpoint position, in addition to information on the color of the pixel in question.

Since the display image data is generated based on the information on the viewpoint position, the way the three-dimensional object looks as represented by the display image data changes as the viewpoint position changes. That is, when the viewpoint position is changed, the state of the object for unsteadiness processing on the display image data (how the object looks) as viewed in the direction of the object for unsteadiness processing also changes.

The display image generating portion 21 generates information on the area in which the object for unsteadiness processing is drawn of the display image data. This information is specifically information for identifying the position (an image area) of a group of pixels, the colors of which are determined using the colors of the surface of the object for unsteadiness processing, of all pixels. The display image generating portion 21 generates this information as image area identification data and stores the same in the image data storage portion 25 together with the corresponding display image data. In this example, the image area identification data identifies a specific image area corresponding to the surface of the three-dimensional object. When determining the color of each pixel, the display image generating portion 21 refers to the original texture map image data to be applied to the surface of each three-dimensional object stored in the storage portion 14.

The elemental image generating portion 22 generates image data (elemental image data) that draws at least one figure (elemental image), at least part of which overlaps each other, inside the image area corresponding to the surface of the object for unsteadiness processing (within the area indicated by the image area identification data) . This figure may be a circle, a triangle, or any other shape. The color of this figure may be such that at least any of lightness, saturation, or hue thereof is adjusted (for example, the color of each pixel within the figure is determined by randomly dispersing lightness using random numbers) based on the original texture map image data to be applied to the object for unsteadiness processing. Further, the position at which the elemental image is drawn may be near an edge portion of the area represented by the image area identification data.

The image synthesizing portion 23 uses the display image data and the image area identification data generated by the display image generating portion 21 and the elemental image data generated by the elemental image generating portion 22 to first synthesize (blend) the elemental image data with the display image data and outputs the result to the image processing portion 24. Translucent synthesizing (alpha-blending) may be performed in this synthesizing based on an α value map included in the original texture map image data (synthesizing area identification information for identifying an area, in which other image data can be synthesized).

The image processing portion 24 performs defocusing processing at least locally for the display image data after synthesizing (synthesized display image data) to be input thereto from the image synthesizing portion 23. The defocusing processing performed herein may, for example, be such that a two-dimensional Gaussian filter is applied to the synthesized display image data. The portion, for which the defocusing processing is performed, includes the area identified by the image area identification data (that is, the portion of a group of pixels, the colors of which are determined according to the original texture map image data applied to the surface of the object for unsteadiness processing) and its surrounding areas to be affected by the defocusing.

Specifically, the defocusing processing is, for example, to correct colors of pixels surrounding any central pixel included in the area identified by the image area identification data of the synthesized display image data. The defocusing processing thus affects colors of pixels beyond the area identified by the image area identification data. This allows an outline of the object for unsteadiness processing to swell or dent, thus representing an unsteady state.

A decision may be made as to whether to make this correction or not as follows. Specifically, a Z value included in the information on the pixel to be corrected (a correction Z value) is compared with a Z value included in the information on the central pixel for defocusing processing (a central Z value). It is determined then whether or not to make the correction through the result of this comparison. Correction by means of the defocusing processing is made, if it is determined that the correction is to be made. For example, the color of the pixel to be corrected is corrected only if the correction Z value is greater than the central Z value. It may also be possible to make the correction through defocusing processing, if the difference between the two Z values falls within a predetermined range (as may be determined using random numbers) even if the correction Z value is less than the central Z value. Through this approach, it becomes possible to represent an image that, as a result of moving flexibly, shields a proximal object located towards a viewer's side. The image data processed by the image processing portion 24 is stored in the image data storage portion 25 before eventually being output to the display portion 13. The image data storage portion 25 stores image data used or generated through these processes. The image data storage portion 25 may be included in the storage portion 14. VRAM (Video RAM) may be specially provided in the display portion 13, with which the image data storage portion 25 may be realized.

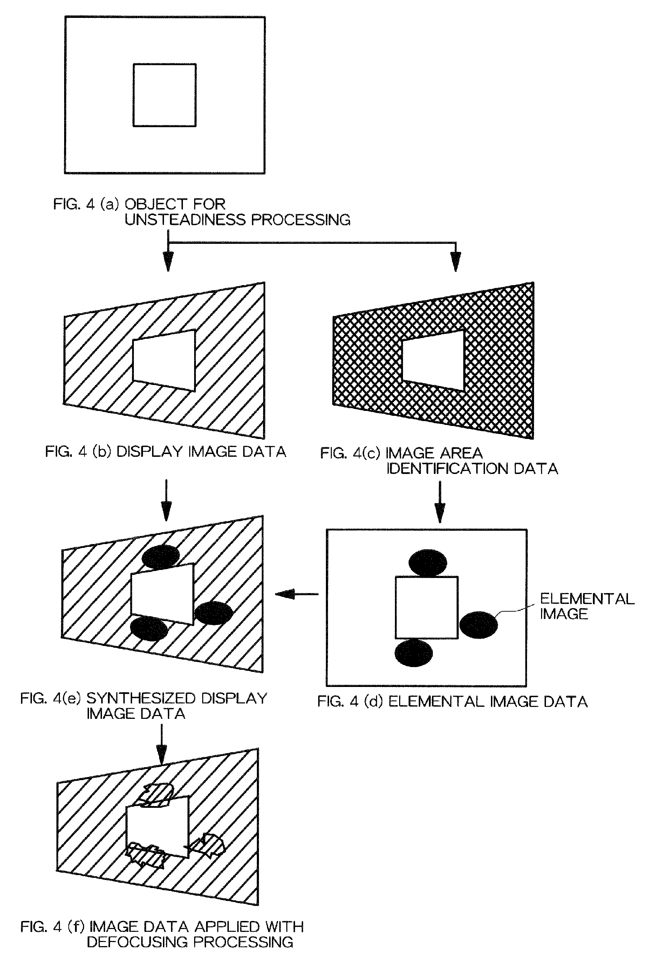

As an example, according to this processing, the display image generating portion 21 generates display image data [FIG. 4 (b) ] based on the object for unsteadiness processing shown in FIG. 4 (a) and outputs the display image data to the image synthesizing portion 23. The elemental image generating portion 22 generates elemental image data that draws an elemental image [FIG. 4 (d)] on the display image data and in the area identified by the image area identification data [FIG. 4 (c)] corresponding to the object for unsteadiness processing. The elemental image generating portion 22 then outputs the elemental image data to the image synthesizing portion 23.

The image synthesizing portion 23 synthesizes the display image data input from the display image generating portion 21 with the elemental image data input from the elemental image generating portion 22 [FIG. 4 (e)] and then produces an output to the image processing portion 24. The image processing portion 24 applies defocusing processing on the display image data that has been synthesized (a synthesized display image data) to generate image data with defocusing processing applied thereto [FIG. 4 (f)]. Thereafter, this image data applied defocusing processing is output to the display portion 13. The defocusing processing blurs an outline of the original texture map image data and the elemental image on the synthesized display image data so that a boundary between the two images is inconspicuous. The defocusing processing also helps make the outline unsteady.

Through this processing, it is easy to generate an image from an object disposed in the three-dimensional space, an edge portion of which looks deformed. It is also possible to generate image data for defocusing randomly with time, or to change a defocusing parameter randomly with time. By so doing, it is possible to generate image data that looks as if an end portion thereof were flexibly stretching and shrinking. The defocusing parameter may still be changed in accordance with, for example, a predetermined rule that changes in a fixed manner with time, instead of randomly with time.

In accordance with the image generating apparatus according to the preferred embodiment of the present invention as applied to the game machine for home use, it is possible, for example, in a game in which a hero or heroine character moving within a three-dimensional space fights against an enemy character, to show that the skin of the enemy character moves as if the character were breathing. Another representation effect can be achieved in an adventure game in which the character moves through the three-dimensional space. For example, in a three-dimensional object having a window therein as shown in FIG. 4, the aforementioned processing is applied in the beginning. When a predetermined condition is met, for example, if the character acquires a game item of some sort, the application of the aforementioned processing is canceled. Then, for example, where it has been impossible to move through the outline of the window that has been flexibly deforming, the predetermined condition that is now met, for example, the acquisition of a game item of some sort, may make the outline of the window look sharp, thus allowing the character to pass through the window portion to go to another game scene.

A still another representation effect is possible. If processing to make the image look flexibly deforming and one to have an opposite visual effect are performed in a random order, the extent of application of the synthesizing processing or the defocusing processing (an application range or a synthesizing ratio for synthesizing) or the density of color of the elemental image included in the elemental image data may be changed with time. This makes it possible to give a visual effect that unsteadiness of the image gradually decreases or increases.

The details of processing are not limited to the preferred embodiment of the present invention described heretofore. For example, in accordance with the preferred embodiment of the present invention, the display image generating portion 21 generates the display image data in consideration of a relative distance to each of the three-dimensional objects. Another approach is nonetheless possible. Specifically, display image data for each of the three-dimensional objects is first individually generated. For the object for unsteadiness processing among these blocks of display image data, elemental image data is then generated and synthesized and the defocusing processing is applied thereto. Then, for each pixel, image data is generated by selecting the pixel having the smallest Z value among the corresponding pixels on each block of display image data.

In the foregoing description of the preferred embodiment of the present invention, the display image generating portion 21 generates the image area identification data as the information for identifying the area, in which the object for unsteadiness processing is drawn, of the display image data. The defocusing processing is then applied based on this image area identification data. The portion, to which the defocusing processing is applied may nonetheless be determined based on, for example, the α value of the original texture map image data applied to the object for unsteadiness processing. Through this approach, while the α value of the original texture map image data included in the display image data is being referred to, the defocusing processing is applied to the pixel and surrounding ones thereof included in the portion that can be synthesized as indicated by the corresponding α value.

In this case, the α value of the elemental image data may also be referenced, and the defocusing processing may be applied to the pixel and surrounding pixels thereof included in the portion that can be synthesized as indicated by the corresponding α value of either the elemental image data or the original texture map image data, whichever is applicable. This approach makes the portion of the elemental image drawn to protrude from the outline of the object for unsteadiness processing the center of the defocusing processing.

The elemental image data may still be generated by drawing at least one elemental image, at least part of which overlaps, the portion that can be synthesized as indicated by the α value of the original texture map image data, not just, or instead of, the image area identification data.

If the α value of either of the two types of image data is used to determined the elemental image data and the portion to which the defocusing processing is applied, without using the image area identification data as described in the foregoing, the image area identification data is not invariably necessary. The display image generating portion 21 may therefore be a type that does not generate the corresponding data.

If the α value is used as described in the foregoing, it becomes possible to perform processing so that the object for unsteadiness processing gradually gains or loses unsteadiness by changing the corresponding α value with time.

In addition, in the above description, the elemental image data is synthesized. The outline portion of the object for unsteadiness processing can be blurred to represent an unsteady object by performing the following processing, instead of synthesizing the elemental image data. Specifically, only the defocusing processing is applied to the pixel and surrounding pixels thereof included at least in either the portion indicated by the image area identification data or the portion indicated to be synthesized by the α value of the original texture map image data, of the display image data. In this case, the defocusing processing may be applied on the exact outline, or areas near the outline, of the portion indicated by the image area identification data or the portion indicated to be synthesized by the α value of the original texture map image data.

The preferred embodiment of the present invention described heretofore is applied to a game machine for representing various gaming attractions. The present invention can still be applied to representation of similar kinds in, for example, movies, three-dimensional graphics software, and the like.

According to the present invention, it is possible to represent unsteady object without involving an increased load of computing operations.

## Claims

1. An image generating apparatus, comprising:
display image generating means for generating display image data to be displayed on a screen based on information on at least one three-dimensional object disposed in a three-dimensional space and information on a viewpoint position;
image area identification data storage means for storing image area identification data that, of said display image data, specifically identifies an image area corresponding to said three-dimensional object; and
image processing means for applying image defocusing processing at least locally to said display image data based on said image area identification data.

2. An image generating apparatus, comprising:
display image generating means for generating display image data to be displayed on a screen based on information on at least one three-dimensional object disposed in a three-dimensional space and information on a viewpoint position;
elemental image generating means for generating elemental image data that is applied to a surface forming said three-dimensional object and that draws at least one elemental image in an image area corresponding to said surface forming said three-dimensional object;
synthesizing means for generating synthesized display image data to be displayed on said screen by synthesizing said generated elemental image data with the display image data generated based on said information on the three-dimensional object; and
image processing means for applying image defocusing processing at least locally to said synthesized display image data.

3. The image generating apparatus according to claim 2, further including:
storage means for storing original texture map image data to be applied to said surface forming said three-dimensional object, wherein
said display image generating means generates the display image data, when generating the display image data, by applying the original texture map image data stored in said storage means to the surface forming the three-dimensional object.

4. The image generating apparatus according to claim 3, wherein said original texture map image data includes synthesizing area identification information for identifying an area, on which image data different from the original texture image can be synthesized, and
said elemental image generating means determines a drawing position of the elemental image based on the synthesizing area identification information of said original texture map image data.

5. The image generating apparatus according to claim 3 or 4, wherein
said elemental image data includes synthesizing area identification information that identifies an area, in which image data different from the elemental image can be synthesized,
said image processing means determines at least one portion, to which the image defocusing processing is applied, based on the synthesizing area identification information included in each of said elemental image data and said original texture map image data, and applies the image defocusing processing to said portion determined.

6. The image generating apparatus according to any one of claims 2 to 5, wherein
said elemental image data or said portion, to which image defocusing processing is applied, is changed with time.

7. An image generating method using a computer, comprising:
a display image generating step for generating a display image to be displayed on a screen based on information on at least one three-dimensional object disposed in a three-dimensional space and information on a viewpoint position;
an image area identification data storage step for storing image area identification data that, of said display image, specifically identifies an image area corresponding to said three-dimensional object; and
an image processing step for applying image defocusing processing at least locally to said display image based on said image area identification data.

8. A computer-readable storage medium storing a program for allowing a computer to execute:
a display image generating step for generating a display image to be displayed on a screen based on information on at least one three-dimensional object disposed in a three-dimensional space and information on a viewpoint position;
an image area identification data storage step for storing image area identification data that, of said display image, specifically identifies an image area corresponding to said three-dimensional object; and
an image processing step for applying image defocusing processing at least locally to said display image based on said image area identification data.

9. A computer-readable storage medium storing display image data to be generated in accordance with the image generating method as claimed in claim 7.
